# EUROPEAN PATENT SPECIFICATION

(11) **EP 1 902 794 B1**
(45) Date of publication and mention of the grant of the patent: **16.10.2013**
(21) Application number: 07016816.6
(22) Date of filing: 28.08.2007
(51) Int. Cl.: B21L 15/00

(54) **Device for stretching a transmission chain**
Vorrichtung zum Strecken einer Übertragungskette
Dispositif pour étirer une chaîne de transmission

(30) Priority: 30.08.2006 NL 1032385
(43) Date of publication of application: 26.03.2008
(73) Proprietor: GEAR CHAIN INDUSTRIAL B.V., 5672 BA Nuenen (NL)
(72) Inventor: Van Rooij, Jacobus Hubertus Maria, 5672 BA Nuenen (NL); Nelissen, Johannes Henricus, 5708 ZS Helmond (NL)
(74) Representative: Griebling, Onno

(56) References cited:
- US-A1- 1 966 831
- US-A1- 4 515 576
- US-A1- 5 690 571
- US-B2- 6 824 484

## Description

The invention relates to a device according to the preamble of claim 1 and claim 4 respectively.

Increasing the strength of the material of the links of an endless transmission chain by stretching while (locally) surpassing the limit of elasticity of this material, such that the properties thereof are improved, is a method known in itself which is already described in 1966 in an article by Dr. Ing. Otto Dittrich, published in February 1966 in VDI Zeitschrift 108.

Such a treatment can with favourable results be effected on a transmission chain such as known from US 5 728 021 (van Rooij) and US 2006/0030442A1 (van Rooij).

Furthermore the United States Patent Specification 6,824,484 describes how this method can be implemented by means of two sets of conical sheaves, each clamped by means of its corresponding control system, of a conventional continuous variable transmission. The Dutch Patent Specification 1 018 594, corresponding therewith, also documents this prior art.

The use of such a known set of conical sheaves is the most obvious solution for the problem: how to support a transmission chain of the kind referred to above while stretching it. This known method and the apparatus used thereto have, however, a number of drawbacks and imperfections. Mounting the chain between the conical sheaves is time consuming, and the shape and dimension of the surfaces of these conical sheaves must be accurately adapted to the shape and the dimension of the protruding ends of the rocker pins (rocker elements) of the chain and particularly to the configuration of the end surface thereof, which is commonly curved in two directions. The most important drawback, however, lies in the fact that the loading of the rocker pins and of the links too, during the stretching of the chain is totally different from the loading which occurs in the chain during the normal operation thereof. There will occur an uncontrolled bending of the rocker pins so that the rocker pins which cooperate with the edges of the openings in the link will load the material around theses edges in a way which is quite different from the loading which occurs during normal operation: It is, in fact, impossible to define the local plastic deformation which occurs during the pre-loading of the link material exactly so that, when this operation is finished, one does, in fact, know that certain parts of the link have been loaded beyond the limit of elasticity but one does not know accurately which parts these are and how far they are loaded. A check of the treated chains later on is, of course, impossible, so that a producer who delivers chains treated in such a way is, in fact, never suffciently sure about the quality thereof and cannot guarantee that a certain chain meets the requested specifications, unless one overdimensions the chain already in the design phase. This, however, leads to higher costs, waste of material an greater dimensions of the chain.

The invention aims to obviate these drawbacks.

*In a first embodiment of the invention this is obtained by the measures according to claim 1.*

*In a second embodiment of the invention this is obtained by the measures of claim 4.*

With these measures is obtained that bending of the rocker pins or elements - which are now not supported anymore on their ends - is positively prevented so that all the drawbacks and disadvantages related thereto don't occur anymore.

*The proposal according to claim 1 is enlarged upon in the claims 2 and 3 The embodiments described in these claims have the advantage to be constructively particularly simple.*

*The proposal according to claim 4 is enlarged upon in the claims 5-7. Although structurally more complicated the embodiments described in these claims have the advantage that they support the rocker pins over the entire length thereof.*

*A further favourable measure is subject of claim 8*

It is observed that US 4 515 576 discloses a contiuously variable transmission with on the one hand a pair of adjustably pulley sheaves and on the other hand a relatively broad sprocket wheel; a so-called 'silent chain", comprising toothed links, is slung over this gearwheel on the one hand while pressurepads fixed to the outermost links are clamped between the pulleysheaves on the other hand. The teeth of the links rest in the shallow spaces between the teeth of the gearwheel and the chain is tensioned by means of a pressure roller.

There is no indication in this disclosure that the chain is ever to be tensioned in such a way that the links are loaded beyond their limit of elasticity and, indeed, if they should be loaded in such a way the results which are obtained by means of the invention cannot be realised because the links of the chain are supported by the summits of the triangular parts thereof so that the resulting stresses in the links are directed in the wrong direction and have no beneficial effect.

Furthermore US 1 966 831 discloses a transmission of similar kind in which every other link is provided at both its ends with a downwardly directed lug of which the end surface rests against the side of a tooth of the gearwheel. Pressure members protruding through the bodies of the pins cooperate with the surfaces of the pulleysheaves. Here, too, nothing in the disclosure hints at a loading such as proposed by the invention and if such a loading should ever occur the stresses introduced into the links by the cooperation of the lugs with the gear teeth are not directed in the correct direction to have any beneficial effect on the links.

The invention is elucidated by means of the drawings. Therein shows:
fig. 1 in a side view an embodiment of a chain to be preloaded, of which chain the links are supported on the inner end edges thereof;
fig. 2 on a very enlarged scale a detail of this way of supporting;
fig. 3a-3e five different possible embodiments according to the invention;
fig. 4 on an enlarged scale the embodiment according to fig. 3a;
fig. 5 on an enlarged scale the embodiment according to fig. 3b;
fig. 6 another embodiment according to the invention;
fig. 7 an embodiment in which the rocker pins of a chain to be preloaded are directly supported by blade-shaped supporting fingers;
fig. 8a-8c in respectively cross-section, lower end view and end view the configuration of a chain to be preloaded by means of the embodiment according to fig. 7;
fig. 9 in an upper end view an entity comprising a supporting core with supporting fingers; and
fig. 10 this entity in a side view;
fig. 11 a in cross-section a core with supporting fingers, built up from a stack of individual plates;
fig. 11b an upper end view of this core with the individual plates;
fig. 12a, fig. 12b and fig. 12c side views of the plates used therein;
fig. 13 schematically and in an end view three supporting rollers for a chain to be preloaded;
fig. 14 a complete device, constructed in accordance with the principle shown in fig. 13.
Fig. 15 the-known- way in which a transmission chain such as a chain treated as proposed by the invention co operates with a pair of conical pulley sheaves.

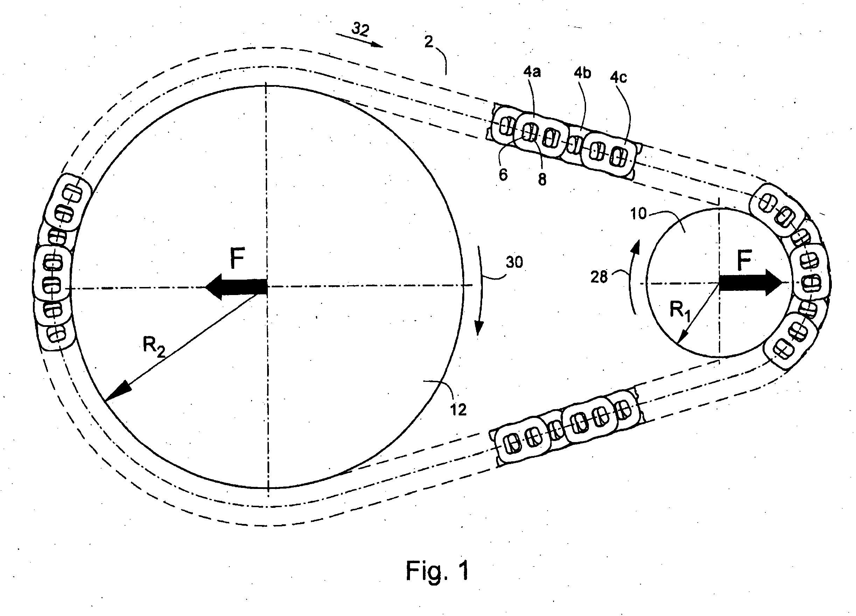

In fig. 1 reference numeral 2 refers to an endless transmission chain built up from individual links such as indicated with reference numerals 4a, 4b, 4c which are mutually coupled by pairs of pin-shaped rocker elements; two of such elements are in the figure indicated with reference numerals 6 and 8 respectively. Such a chain is known in itself from EP 0 741 255 B1 in the name of applicant.

To subject this chain to a pre-loading treatment in which the material of the links is stretched beyond the limit of elasticity thereof - which is, as stated herein before, a treatment known in itself - the chain is guided around two cylindrical supporting rollers with mutual different diameter, namely a first supporting roller 10 with radius R1 and a second supporting roller 12 with preferably a greater radius R2. Both the supporting rollers are pressed away from each other with a force indicated by F so that stresses are generated in the chain 2 guided there around. The result is that the material of the links which is present around the link openings, thus there where the pins contact the links, are subject to compressing stresses and will eventually deform plastically, so that the strength of this material is permanently increased. This pre-loading is, as is documented in the introduction of this specification, in principle known from the prior art.

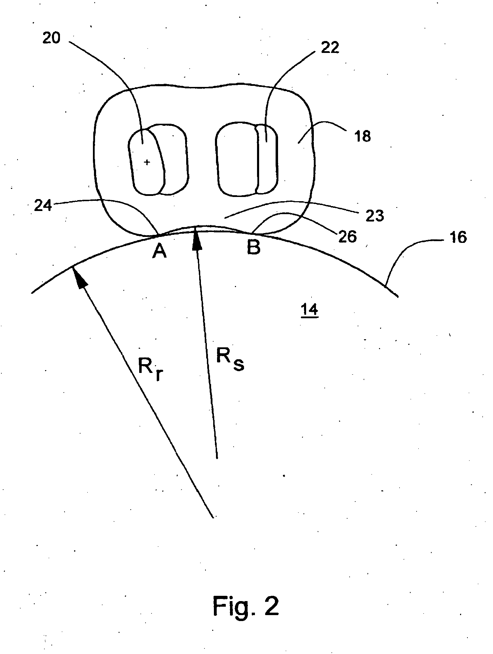

Contrary to the way of supporting the chain as known from the US Patent Specification 6,824,484 and the Dutch Patent Specification 1 018 594 respectively, in which the chain is supported on the ends of the rocker elements 6, 8 which are clamped between the V-shaped surfaces of the pulley sheaves of a common continuously varying transmission (CVT) with all the disadvantages which go therewith as described above the invention proposes to locate this support at the radial inner areas of the chain. In a first embodiment, shown in fig. 1-6, this is done in that the radially inner edges of the respective links rest, during their travel over the cylindrical rollers, such as the rollers 10-12 in fig. 1, on the outer surface of these rollers, in the way as shown in fig. 2. Fig. 2 shows a supporting roller 14 with a radius of curvature Rr and a link 18 which rests upon the outer surface 16 thereof ;this figure also shows the rocker pins (rocker elements) 20 and 22 respectively. As shown the configuration of the lower link surface 23 has a hollow (concave) portion with a radius of curvature Rs, bounded by two convex edge parts 24 and 26 respectively. The drawing shows the state in which the end edges of these edge parts 24, 26 rest on the roller surface 16. In an optimal situation the radius of curvature Rₛ of the supporting roller 14 is equal to the radius of curvature Rh of this hollow part - the lower link circumference then lies fully against the outer surface and the contact stresses are minimal.

During the preloading the rollers 10 and 12 respectively rotate along their respective axes in the direction of the arrows 28 and 30 respectively so that the chain will move in the direction of the arrow 32.

In the embodiment according to fig. 1 the tensile forces in the chain 2 are generated in that the rollers 10 and 12 respectively are pressed away from each other with a defined force F.

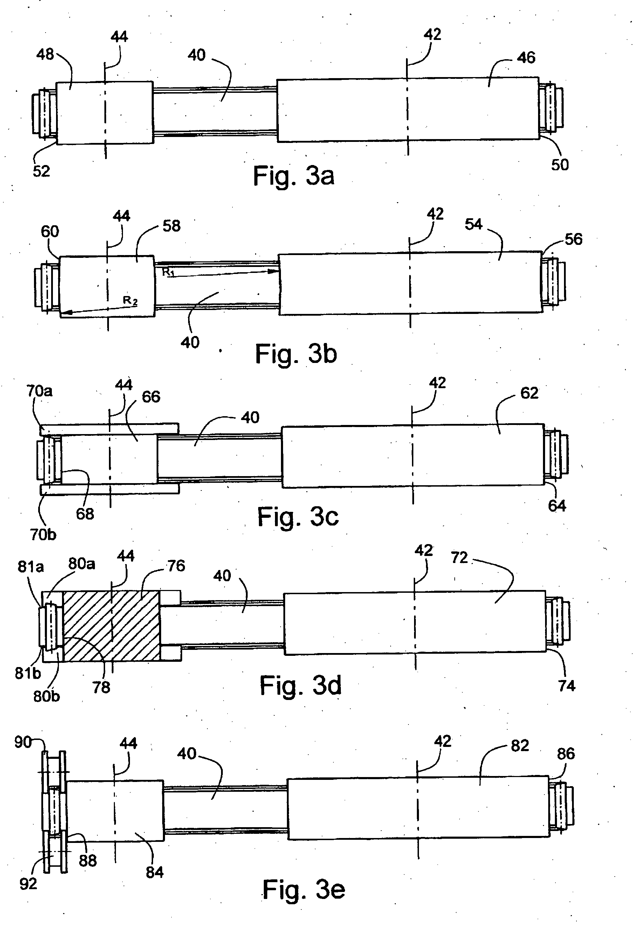

Fig. 3a-3e show examples of configurations of supporting rollers in which a supporting roller with relatively great diameter is shown on the right hand side and a supporting roller with small diameter on the left hand side. The chain to be treated is in these five drawings indicated with the same reference numeral, namely reference numeral 40; the axis (axis of rotation) of the right hand roller is indicated with 42 and same of the left hand roller with 44.

Fig. 3a shows an embodiment in which the right hand roller 46 and the left hand roller 48 both have a circle-cylindrical outer surface, indicated with respectively 50 and 52.

Fig. 3b shows an embodiment in which the right hand roller 54 has a concave outer surface 56 and the left hand roller has a convex outer surface 60. The radius of curvature of the surface 56 is indicated with R1 and same of surface 60 with R2.

Of course combinations the respective configurations are possible, thus a combination in which a roller with a convex or concave outer surface is combined with a cylindrical roller. All these combinations depend upon the distribution of the loading which one wants to effect in the links.

Fig. 3c shows a right hand roller 62 with a circle-cylindrical outer surface 64 while the left hand roller 66 has a cylindrical supporting surface 68 bounded by to guiding flanges 70a, 70b.

Fig. 3d shows two supporting rollers, the right hand one, 72, with a cylindrical supporting surface 74 and the left hand one, 76, shown in cross-section also with a cylindrical supporting surface 78 which is bounded by guiding flanges 80a, 80b, which enclose the chain locally and support it, namely at the position of the links which lie at the outer edges 81 a, 81 b of the chain 40.

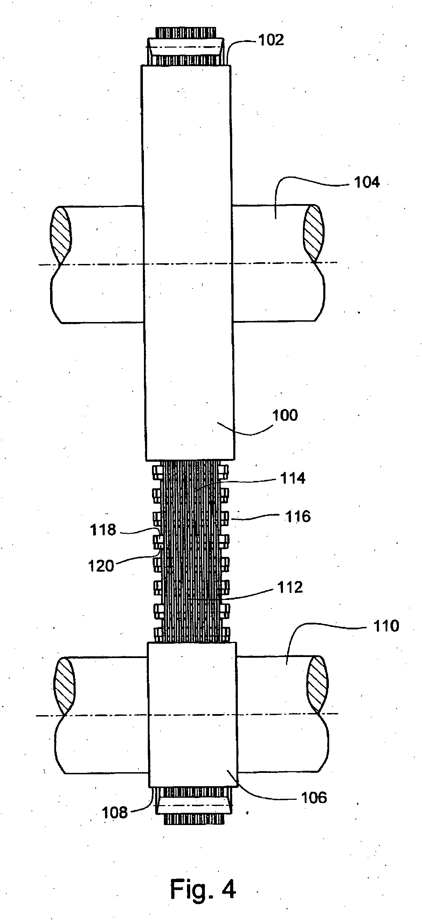

Finally fig. 3e shows an embodiment in which both the right hand roller 82 and the left hand roller 84 has a cylindrical supporting surface 86 and 88 respectively (in this respect this embodiment is the same as the one according to fig. 4a), but in which the left hand roller 84 is combined with two guide rollers 90, 92 with flanges to guide the chain 40 enclosed therein between.

Fig. 4 shows in more detail an embodiment corresponding to the one which is shown in fig. 3a. Here is shown the big supporting roller 100 with cylindrical supporting surface 102, and rotatingly supported by the shaft 104, as well as the smaller supporting roller 106, also with a cylindrical supporting surface 108 and supported by the shaft 110. The chain which is to be stretched is indicated with 112 and this figure shows clearly how this chain is built up (as known in itself), from link packets 114 coupled by rocker assemblies 116 which each comprise a longer pin 118 which, during use of the chain in a CVT cooperates with the pulley surfaces thereof and a shorter rocker pin 120 which cooperates with the pin 118.

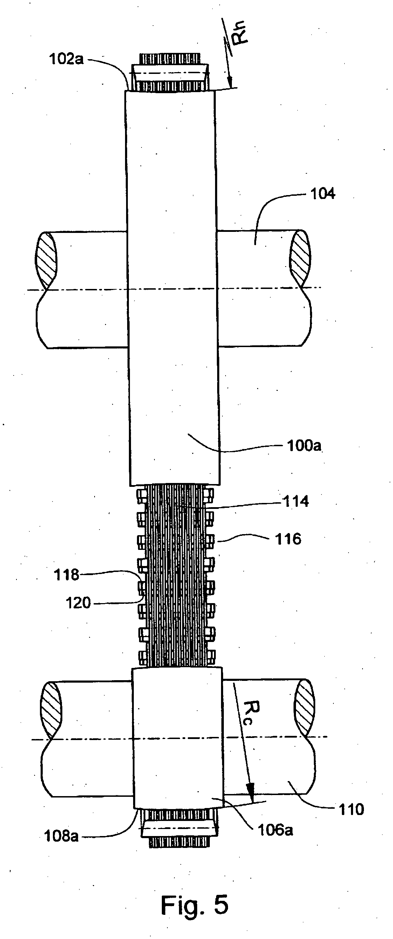

Fig. 5 shows a similar configuration but here the bigger roller 100a has a concave supporting surface having a radius of curvature Rh while the smaller roller 106a has a convex supporting surface 108a with radius of curvature Rc.

During the stretching of a chain it is of importance that this chain remains very well centered on the outer surfaces of the respective rollers. When the outer surface of one of these rollers is convex there will be, as known in itself, a self-centering effect so that one need not fear that the chain will run off the roller. Examples of a cross-guiding of the chain are already given in the figures 3c, 3d and 3e.

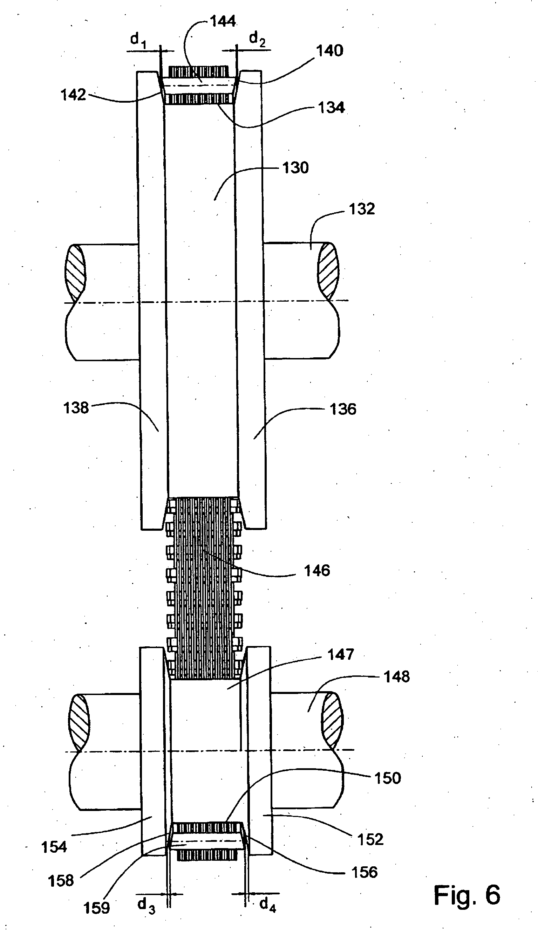

Fig. 6 shows a favorable way of guiding the chain using the centering of the pin-shaped rocker elements thereof by means of conical guiding surfaces which cooperate with these pins. Fig. 6 shows a first supporting roller 130 with relatively great diameter, fixed to the rotating shaft 132 and having a cylindrical outer surface 134; this surface 134 is enclosed by two guiding flanges 136 and 138 respectively with conical guiding surfaces 140 and 142 respectively. They enclose with a small play the protruding rocker pins (rocker elements) 144 of the chain 146 which is to be preloaded. This play is indicted with d1 and d2 respectively. The other supporting roller 147 which is fixed to the shaft 148 also has a plane cylindrical supporting surface 150, here, too, this supporting surface 150 is enclosed by two flanges 152 and 154 with conical guiding surfaces 156 and 158 respectively which enclose the protruding pins (rocker elements) 159 with a small play (indicated with d3 and d4 respectively.

In all embodiments described herein before one can use supporting rollers with a cylindrical, a convex or a concave configuration of the outer surface thereof and every possible combination thereof so that any desired stress pattern can be realized in a chain which is subjected to the preloading.

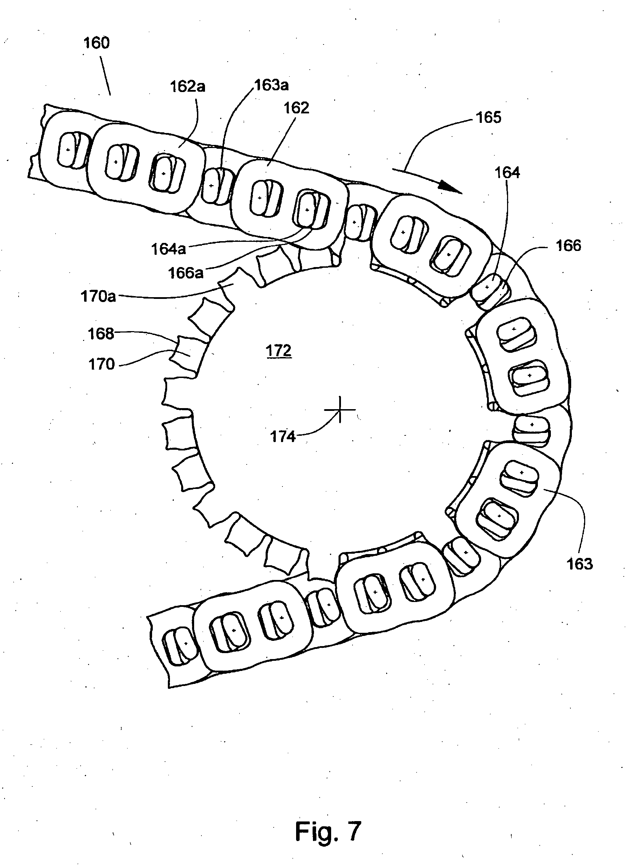

The embodiments described hereinbefore all have in common the fact that within the scope of the general main idea of the application - the supporting of a chain to be preloaded on the inner area thereof - use is made of supporting rollers on which rest the end edges of the links which are directed inwardly. It is, however, also possible to use a configuration in which a chain to be preloaded is not supported under the end edges of the links but under the longitudinal end edges of the rocker members which intercouple these links. Such an embodiment is shown in fig. 7 to and including 14.

Fig. 7 shows a chain 160, here, too, constituted of links 162 intercoupled by rocker assemblies 163; the latter consist each of a first pin (rocker element) 164 of which the ends cooperate in a CVT, in a torque transmitting way with the surfaces of the pulley sheaves thereof, and second, shorter, pins (rocker elements) 166. During the preloading the respective lower end edges of these pins (indicated with reference numerals 164a, 166a for the pins which are shown in link 162) rest on the supporting end edges 168 of blade-shaped fingers 170 which protrude radially from a central core 172, which can rotate around the axis 174. The thickness of these blade-shaped fingers 170 is such that these fingers fit in the spaces which are always present between the link packets of a chain. So, for instance, after rotation in the direction of the arrow 165, the finger 170a will fit into the space which is present between the end parts of the links 162, 162a which are directed towards each other and will support the pins (elements) of the rocker assembly 163a; this finger has a thickness which is just a little bit smaller than same of the links. So during the process of pre-loading not the links, but the rocker pins (rocker elements) are supported, and this at several positions at one time. Bending of the rocker pins (rocker elements) is absolutely impossible.

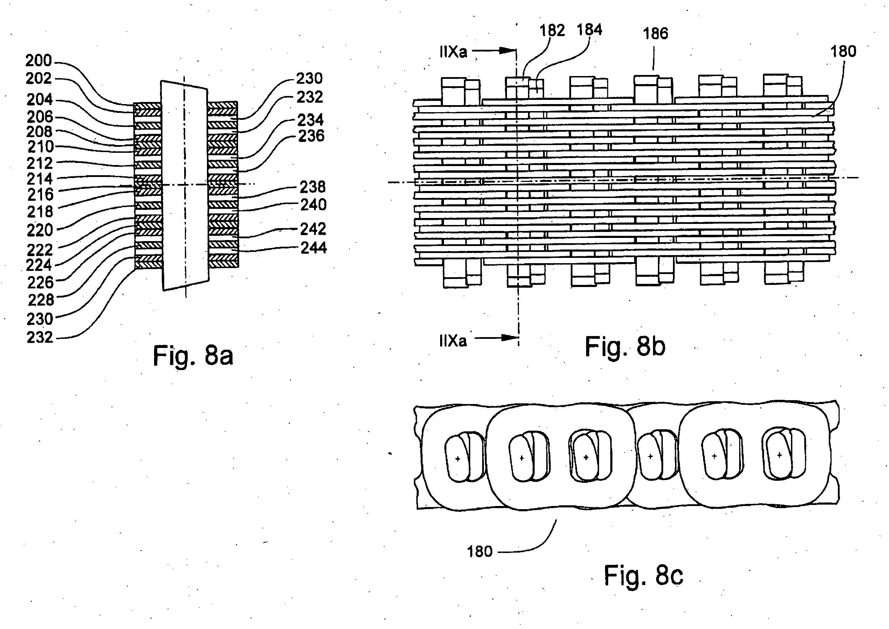

Fig. 8a shows a cross-section over the line IIXa-IIXa in fig. 8b of a chain 180 of which in this drawing a part is shown in an upper view while the same chain 180 is shown in fig. 8c in a side view. The cross-section goes through the pin (element) 182 which constitutes in combination with the cooperating pin 184 a rocker assembly 186.

As particularly fig. 8a shows the individual links do not lie - as seen in the cross-direction of the chain -, all against each other, there is in this case a space 230 between the links 202 and 204 and a space 232 between the links 204 and 206; a subsequent space 234 is to be found between the links 210 and 212 and a space 236 between the links 212 and 214; furthermore there is a space 238 between the links 218 and 220 and a space 240 between the links 220 and 222 while finally one finds a space 242 between the links 224 and 226 and a space 244 between the links 228 and 230. In these spaces the blade-shaped fingers 170 shown in fig. 7 fit and ultimately these come to lie against the under edges of the rocker elements such as the rocker elements 164a and 166a. The links have a assembly pattern which, as shown in fig. 8b, repeats itself after every three rocker member assemblies, such as known in itself.

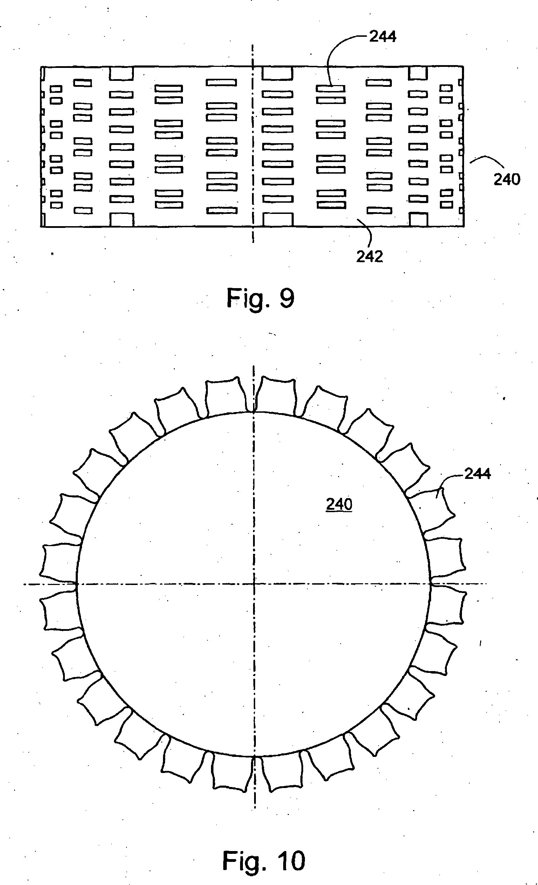

Fig. 9 shows an upper view and fig. 10 shows a side view of a circle-cylindrical core 240 with fingers 244 protruding from the outer surface 242 thereof; these are not all of them indicated individually with a reference numeral in this fig. 9. The pattern thereof is such that they fit between the opening which are present between the links, such as shown in fig. 8b. Such a core with protruding blade-shaped supporting fingers can, for instance, be made by spark erosion.

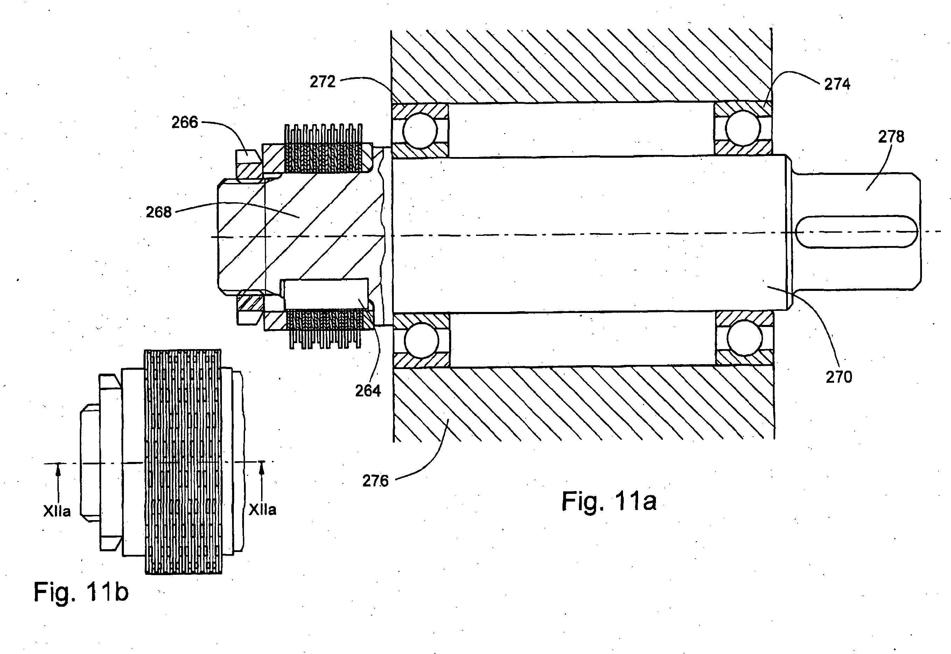

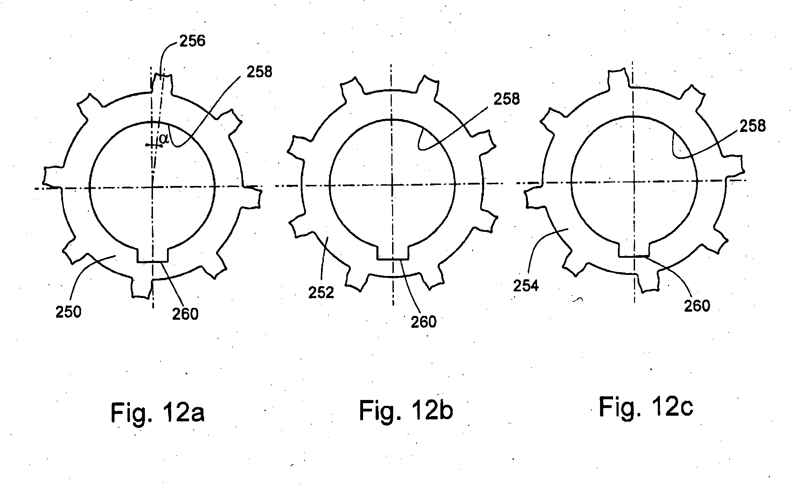

It is, however, also possible to make such a core with protruding blade-shaped supporting fingers as a stack of individual ring-shaped elements with radially protruding blade-shaped fingers in the way as shown in fig. 11a-11b and 12a-12c. Fig. 12a, 12b and 12c show three, generally similar but in detail mutually different rings 250, 252, 254 from thin plate material, each with radially protruding supporting fingers which are not specified individually but which are each indicated with reference numeral 256. Each ring 250, 252, 254 has a cylindrical inner boundary 258 with a square locating cutout 260. As fig. 11a en 11b show a number of such rings are combined into the stack 262 which is shown in fig. 11 b in upper view and this according to a pattern which corresponds to the pattern of the interspaces in the chain to be preloaded. This stack is, in combination with the key 264 by means of the clamping nut 266 fixed to the end 268 of the shaft 270 which is by means of the bearings 272, 274 supported in a suitable frame 276 and which can be driven in any suitable way at the end 278 of the shaft.

It will be clear that by a suitable choice of the orientation of the fingers 256 around the surface of the ring 250 (a measure of which can for instance be the angle α between the axis 280 of such a finger and the vertical centerline 282 of the ring), any configuration of the link packets van be taken into account, also situations in which there is, as seen in the longitudinal direction of the chain a varying pitch, thus a varying centerline distance between individual pairs of rocker pins (rocker elements).

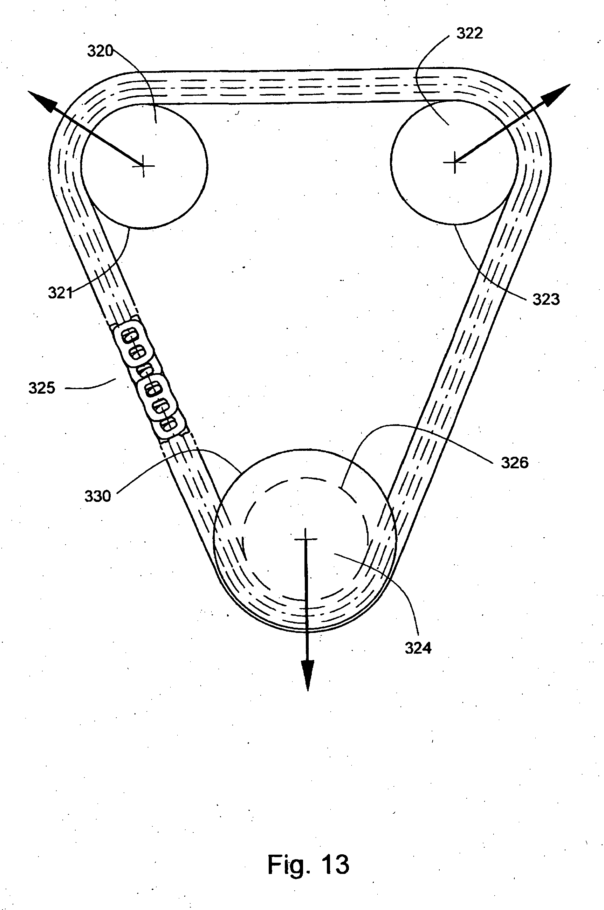

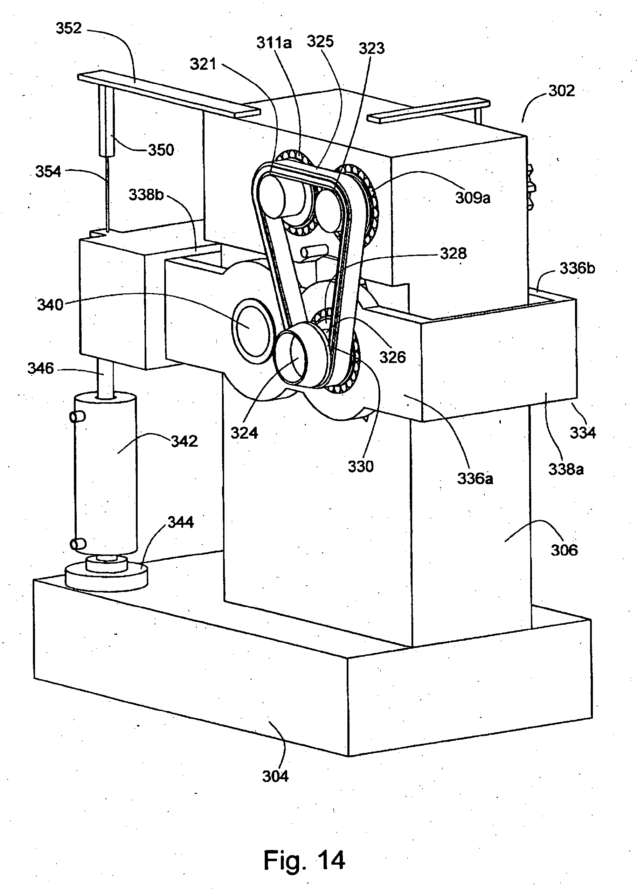

A complete device for stretching a chain in which the above mentioned principles are used is elucidated on the hand of fig. 13 and 14.

Fig. 13 shows schematically and in end view the configuration used in such an apparatus. There are two upper supporting rollers 320, 322 each with a circle-cylindrical surface and one lower supporting roller 262 which has the configuration as shown in fig. 6, thus in which the cylindrical supporting surfaces is bounded by two flanges with conical guide surfaces. The chain to be preloaded is indicated with 325.

The apparatus shown in fig. 14 and indicated in its entirety with reference numeral 302 comprises as base plate 304 and a very stiff, schematically shown, frame 306 with

parallellepipedum-shaped outer dimensions. Near the upper end thereof this frame carries two shafts, not indicated with a reference numeral and supported by bearings 309a and 311 a in the frame, each having at their end which is visible in the drawing a cylindrical supporting surface 321 and 323 respectively. Below these shafts there is a third shaft 324 with a cylindrical supporting surface 326 bounded by guiding flanges 328, 330 in the way as shown in fig. 6. This shaft 324 is supported by two suitable bearings (not shown) in a yoke 324 which encloses the frame 306 and has the long sides 336a, 336b which run along the front and rear side of the frame 306 and the short side 338a, 338b. The yoke is supported by the frame (306) by means of the shaft 340. The yoke can tilt over a limited angle around the shaft 340 and is actuated by a linear actuator 342 which acts in two directions and which rests via the pressure sensor 344 upon the base plate 304; the piston rod 346 thereof is coupled to the short side 338b of the yoke 340 as close as possible to the plane of symmetry through the three pairs of supporting surfaces.

Finally there is a displacement sensor 350 which is coupled by means of arm 352 with the frame and by means of the finger 354 with the arm 338b of the yoke 334.

The operation of the device will be clear. By retracting the double acting actuator 342 the displaceable shaft with its corresponding supporting surface will move upwardly and a chain which is to be preloaded can then be mounted around the three respective shafts. Thereafter a controlled supply of hydraulic pressure medium results into an upward movement of the piston rod 346 so that the chain is pretensioned with a predetermined force. Then the initial length of the chain is measured by means of the sensors 350, 354. Finally the piston rod and with it the end 338b of the yoke is pressed upwardly with a greater force so that the shaft which is supported by the yoke moves downwardly and the chain is preloaded while surpassing the limit of elasticity of the links. During this operation the shaft 308 is driven rotatingly by means which are not shown. After this operation the lasting elongation can be measured by means of the sensors 350, 354.

It will be Gear that the mounting of the chain, the pretension, the measuring of the initial length, the rotatingly driving of the chain and the stretching of the chain can not only be effected manually but also in an automated process during which for each chain the particulars as measured are stored.

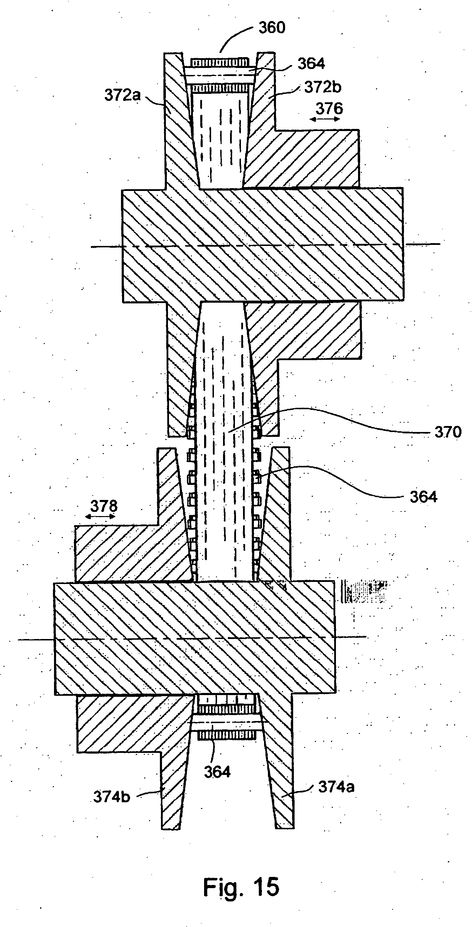

Fig 15 shows schematically the (known) way in which a transmission chain such as a chain 370 of the kind referred to cooperates with the conical surfaces of the pulley sheaves 372a,372b;374a,374b of a continuously variable transmission. The drawing shows the ends of the pins clamped between these surfaces. The pulleys 372a,372b can, for instance, be the driving pulleys while the chain 370 transmits the torque via the pins 364 and the links 360 to the driven pulleys 374a,374b. The axial position of the conical sheave 372a is controlled by a (not shown) actuator which moves this sheave in the direction of the arrows 376 while the axial position of the conical sheave 374b is controlled by another (not shown) actuator which moves this sheave in the direction of the arrows 378. The respective movements are such that, when one pulley moves to the left (in the drawing) the other pulley moves to the right, and opposite while the chain 370 remains centered.

## Claims

1. A device (10,12,14) for stretching a transmission chain (2,40) which is closed in itself and which comprises a number of adjacent links (4a,4b,4c) which are, in the longitudinal direction of the chain, intercoupled by pairs of longitudinal rocker elements (6,8) in which of each pair the ends of at least one rocker element can cooperate in a torque transmitting way with the pulley sheaves (372a,372b;374a,374b) of a pulley sheave transmission, comprising at least one first and one second supporting surface (10,12,14) which lie at a distance of each other and support a chain (2) to be treated according to a part of an arc, and having means to generate in this chain such a tensile stress that the limit of elasticity of the material of the links is at least locally surpassed, **characterized in that** at least one supporting surface (14) is configured to support the radial inner edges (24,26) of at least a part of the links (18) such that essentially only stresses running in the longitudinal direction of the respective links are generated in these links

2. Device according to claim 1, **characterized in that** the supporting surface is configured in such a way that a link (18) with a hollow end edge configuration is supported in two points (24,26) which lie at a distance of each other.

3. Device according to claim 1-2, **characterized in that** the supporting surface is at least a part of the outer surface of a circle-cylinder (16).

4. A device for stretching a transmission chain (160) which is closed in itself and which comprises a number of adjacent links (162) which are, in the longitudinal direction of the chain, intercoupled by pairs of longitudinal rocker elements (6,8) in which of each pair the ends of at least one rocker element can cooperate in a torque transmitting way with the pulley sheaves (372a,372b;374a,374b) of a pulley sheave transmission, comprising at least one first and one second supporting surface which lie at a distance of each other and support a chain (160) to be treated according to a part of an arc, and having means to generate in this chain such a tensile stress that the limit of elasticity of the material of the links is at least locally surpassed **characterized in that** this at least one supporting surface is built up from a number of part surfaces (168), each configured to support at least a part (164a,166a) of the radial inner end edge of at least one rocker element of each pair of rocker elements out of a number of adjacent rocker elements as seen in the longitudinal direction of the chain.

5. Device according to claim 4, **characterized in that** each part surface (168) is made up from an end edge of a plate-shaped finger (170) of which the thickness is adapted to the interspace which is present between adjacent links, which finger (170), in combination with a number of similar fingers, protrudes radially from the outer surface of a common rotatingly supported bearer (172), and in which the positioning pattern of these fingers is adapted to the confguration of the link packets of the chain.

6. Device according to claim 4-5, **characterized in that** the fingers (244) and bearer (240) constitute one common part.

7. Device according to claim 5, **characterized in that** the respective blade-shaped fingers each protrude from the outer circumference of a ring-shaped bearer from plate material (250,252,254) and constitute one whole therewith, while a number of these ring-shaped bearers are, together with interpieces oaf suitable thickness, are stacked into a unit which is carried by a central shaft (268).

8. Device according to claim 1-7, **characterized by** means for adjusting the distance between a first (10) and a second (12) supporting surface respectively to generate defined tension forces in a chain to be treated.

## Patentansprüche

1. Vorrichtung (10, 12, 14) zum Strecken einer Übertragungskette (2, 40), die in sich geschlossen ist und eine Anzahl benachbarte Laschen (4a, 4b, 4c) umfasst, welche in Längsrichtung der Kette mittels Paaren von länglichen Wiegeelementen (6, 8) gekuppelt sind, bei welchen die Enden mindestens eines Wiegeelementes jedes Paares drehmomentübertragend mit den Keilscheiben (372a, 372b; 374a, 374b) eines Keilscheibengetriebes zusammenwirken können, umfassend mindestens eine erste und eine zweite Stützfläche (10, 12, 14), die im Abstand voneinander angeordnet sind und eine Kette (2) derart abstützen, dass sie Teil eines Bogens bildet, und mit Mitteln zum Erzeugen einer Zugbeanspruchung in dieser Kette derart, dass die Elastizitätsgrenze des Werkstoffes der Laschen mindestens lokal überschritten wird, **dadurch gekennzeichnet, dass** mindestens eine Stützfläche (14) so gestaltet ist, dass sie die radial inneren Kanten (24, 26) mindestens eines Teiles der Laschen (18) abstützt, derart dass im Wesentlichen nur in Längsrichtung verlaufende Spannungen in die entsprechenden Laschen erzeugt werden.

2. Vorrichtung nach Anspruch 1, **dadurch gekennzeichnet, dass** die Stützfläche so gestaltet ist, dass eine Lasche (18) mit einer hohlen Endkantenkonfiguration abgestützt wird an zwei Punkten (24, 26), welche im Abstand voneinander liegen.

3. Vorrichtung nach Anspruch 1 oder 2, **dadurch gekennzeichnet, dass** die Stützfläche mindestens ein Teil der Außenfläche eines Kreiszylinders (16) ist.

4. Vorrichtung zum Strecken einer Übertragungskette (160), die in sich geschlossen ist und eine Anzahl benachbarte Laschen (162) umfasst, welche in Längsrichtung der Kette mittels Paaren von länglichen Wiegeelementen (6, 8) gekuppelt sind, bei welchen die Enden mindestens eines Wiegeelementes jedes Paares drehmomentübertragend mit den Keilscheiben (372a, 372b; 374a, 374b) eines Keilscheibengetriebes zusammenwirken können, umfassend mindestens eine erste und eine zweite Stützfläche, die im Abstand voneinander angeordnet sind und eine Kette (160) derart abstützen, dass sie Teil eines Bogens bildet, und mit Mitteln zum Erzeugen einer Zugbeanspruchung in dieser Kette derart, dass die Elastizitätsgrenze des Werkstoffs der Laschen mindestens lokal überschritten wird, **dadurch gekennzeichnet, dass** mindestens eine Stützfläche von einer Anzahl von Teilflächen (168) gebildet ist, die jeweils gestaltet sind zum Unterstützen mindestens eines Teils (164a, 166a) der radial inneren Endkante mindestens eines Wiegeelementes jedes Paares von Wiegeelementen aus einer Anzahl in Längsrichtung der Kette gesehen benachbarter Wiegeelemente.

5. Vorrichtung nach Anspruch 4, **dadurch gekennzeichnet, dass** jede Teilfläche (168) von einer Endkante eines plattenförmigen Fingers (170) gebildet ist, dessen Dicke an den Zwischenraum zwischen benachbarten Laschen angepasst ist, wobei dieser Finger (170) in Kombination mit einer Anzahl ähnlicher Finger radial von der Außenfläche eines gemeinsamen drehbar gelagerten Trägers (172) wegragt, wobei das Positionierungsmuster dieser Finger an die Konfiguration der Laschenpakete der Kette angepasst ist.

6. Vorrichtung nach einem der Ansprüche 4 oder 5, **dadurch gekennzeichnet, dass** die Finger (244) und der Träger (240) ein gemeinsames Teil bilden.

7. Vorrichtung nach Anspruch 5, **dadurch gekennzeichnet, dass** die entsprechenden blattförmig geformten Finger jeweils vom äußeren Umfang eines ringförmigen Trägers aus Plattenmaterial (250, 252, 254) wegragen und damit ein Ganzes bilden, während eine Anzahl dieser ringförmigen Träger zusammen mit Zwischenstücken passender Dicke zu einer Einheit gestapelt sind, welche von einem zentralen Achse (268) getragen sind.

8. Vorrichtung nach einem der Ansprüche 1 bis 7, **gekennzeichnet durch** Mittel zum Einstellen des Abstandes zwischen einer ersten (10) und einer zweiten (12) Stützfläche zum Erzeugen definierter Zugkräfte in einer zu behandelnden Kette.

## Revendications

1. Dispositif (10, 12, 14) pour étirer une chaîne de transmission (2, 40) qui est fermée sur elle-même et qui comprend un nombre de maillons adjacents (4a, 4b, 4c) qui sont, dans la direction longitudinale de la chaîne, accouplés entre eux par des paires d'éléments oscillants longitudinaux (6, 8) dans lesquelles, dans chaque paire, les extrémités d'au moins un élément oscillant peuvent coopérer en transmission de couple avec les roues de poulie (372a, 372b ; 374a, 374b) d'une transmission à poulies, comprenant au moins une première et une deuxième surface de support (10, 12, 14) qui se trouvent à distance l'une de l'autre et qui supportent une chaîne (2) à traiter selon une partie d'un arc, et comportant un moyen servant à générer dans cette chaîne un effort de traction tel que la limite d'élasticité du matériau des maillons est au moins localement dépassée, **caractérisé en ce que** au moins une surface de support (14) est configurée pour supporter les bords intérieurs radiaux (24, 26) d'au moins une partie des maillons (18), de sorte que ne sont générés dans les maillons respectifs essentiellement que des efforts orientés dans la direction longitudinale de ces maillons.

2. Dispositif selon la revendication 1, **caractérisé en ce que** la surface de support est configurée de telle manière qu'un maillon (18) ayant une configuration de bord d'extrémité creux est supporté en deux points (24, 26) qui sont distants l'un de l'autre.

3. Dispositif selon la revendication 1 ou 2, **caractérisé en ce que** la surface de support est au moins une partie de la surface extérieure d'un cylindre circulaire (16).

4. Dispositif pour étirer une chaîne de transmission (160) qui est fermée sur elle-même et qui comprend un nombre de maillons adjacents (162) qui sont, dans la direction longitudinale de la chaîne, accouplés entre eux par des paires d'éléments oscillants longitudinaux (6, 8) dans lesquelles, dans chaque paire, les extrémités d'au moins un élément oscillant peuvent coopérer en transmission de couple avec les roues de poulie (372a, 372b ; 374a, 374b) d'une transmission à poulies, comprenant au moins une première et une deuxième surface de support qui se trouvent à distance l'une de l'autre et qui supportent une chaîne (160) à traiter selon une partie d'un arc, et comportant un moyen servant à générer dans cette chaîne un effort de traction tel que la limite d'élasticité du matériau des maillons est au moins localement dépassée, **caractérisé en ce que** ladite au moins une surface de support est constituée d'un nombre de surfaces partielles (168) configurées chacune pour supporter au moins une partie (164a, 166a) du bord d'extrémité intérieur radial d'au moins un élément oscillant de chaque paire d'éléments oscillants parmi un nombre d'éléments oscillants adjacents, vus dans la direction longitudinale de la chaîne.

5. Dispositif selon la revendication 4, **caractérisé en ce que** chaque surface partielle (168) est faite à partir d'un bord d'extrémité d'un doigt de forme plate (170) dont l'épaisseur est adaptée à l'espace qui est présent entre les maillons adjacents, lequel doigt (170), en combinaison avec un nombre de doigts similaires, fait saillie radialement depuis la surface extérieure d'un support commun supporté en rotation (172), et dans lequel le schéma de positionnement de ces doigts est adapté à la configuration des paquets de maillons de la chaîne.

6. Dispositif selon la revendication 4 ou 5, **caractérisé en ce que** les doigts (244) et le support (240) constituent une partie commune.

7. Dispositif selon la revendication 5, **caractérisé en ce que** les doigts de forme plate respectifs font saillie chacun depuis la circonférence extérieure d'un support en forme de bague à partir d'un matériau de type tôle (250, 252, 254) et constituent un ensemble avec celui-ci, tandis qu'un nombre de ces supports en forme de bague sont, avec des pièces intermédiaires d'épaisseur appropriée, empilés pour former une unité qui est portée par un arbre central (268).

8. Dispositif selon les revendications 1 à 7, **caractérisé par** un moyen servant à régler la distance entre une première (10) et une deuxième (12) surface de support pour générer respectivement des forces de tension définies dans une chaîne à traiter.
